(19) **Europäisches Patentamt**
**European Patent Office**
**Office européen des brevets**

(11) **EP 3 076 258 B1**

(12) **FASCICULE DE BREVET EUROPEEN**

(45) Date de publication et mention
de la délivrance du brevet:
**01.08.2018 Bulletin 2018/31**

(51) Int Cl.:
***B64C 39/02*** (2006.01) ***G01C 21/16*** (2006.01)
***G06T 7/20*** (2017.01)

(21) Numéro de dépôt: **16162801.1**

(22) Date de dépôt: **30.03.2016**

(54) **DRONE MUNI D'UNE CAMÉRA VIDEO À VISÉE VERTICALE COMPENSÉE DES ROTATIONS INSTANTANÉES POUR L'ESTIMATION DES VITESSES HORIZONTALES**

DROHNE MIT EINER VIDEOKAMERA MIT VERTIKALEM VISIER MIT KOMPENSATION DER UNVERMITTELTEN DREHBEWEGUNGEN FÜR DIE EINSCHÄTZUNG HORIZONTALER GESCHWINDIGKEITEN

DRONE PROVIDED WITH A VIDEO CAMERA WITH COMPENSATED VERTICAL FOCUSSING OF INSTANTANEOUS ROTATIONS FOR ESTIMATING HORIZONTAL SPEEDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1552813**

(43) Date de publication de la demande:
**05.10.2016 Bulletin 2016/40**

(73) Titulaire: **Parrot Drones**
**75010 Paris (FR)**

(72) Inventeurs:
• **ELINE, Pierre**
**95400 Arnouville Les Gonesse (FR)**
• **CALLOU, François**
**75012 PARIS (FR)**

(74) Mandataire: **Dupuis-Latour, Dominique**
**Bardehle Pagenberg**
**SO Square Opéra**
**5,rue Boudreau**
**75009 Paris (FR)**

(56) Documents cités:
**EP-A1- 2 400 460**

• **Myung Hwangbo: "Robust Monocular Vision-based Navigation for a Miniature Fixed-Wing Aircraft", , 15 septembre 2009 (2009-09-15), XP055021926, Pittsburgh, Pennsylvania 15213 Extrait de l'Internet: URL:http://www.cs.cmu.edu/~myung/thesis_proposal.pdf [extrait le 2012-03-15]**

## Description

L'invention concerne le pilotage des engins volants motorisés tel que les drones, notamment les drones à voilure tournante tels que les quadricoptères.

*L'AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre), d'une caméra frontale captant une image de la scène vers laquelle est dirigé le drone et d'une caméra de visée verticale captant une image du terrain survolé. Ils sont pourvus de rotors multiples entraînés par des moteurs respectifs commandables de manière différenciée afin de piloter le drone en attitude et en vitesse. Divers aspects de ces drones sont décrits, entre autres, dans les EP 2 364 757 A1, EP 2 400 460 A1, EP 2 613 213 A1 ou encore EP 2 644 240 A1 EP 2 613 214 A1 (Parrot SA).

L'invention concerne plus précisément la mesure de la vitesse horizontale du drone, qui repose essentiellement sur l'utilisation de l'image fournie par la caméra à visée verticale, au moyen d'un calculateur qui analyse la séquence des images captées par cette caméra. Le déplacement estimé de la caméra donne une mesure de la translation horizontale du drone dans les deux directions, de façon indépendante des capteurs inertiels (accéléromètres).

Plus précisément, deux images consécutives données par la caméra sont analysées pour donner un déplacement apparent, en pixels, dans l'une et l'autre dimension horizontale d'un repère terrestre absolu. Si l'on connait l'altitude (donnée par les capteurs ultrasonore et barométrique embarqués par le drone), il est possible de convertir ce déplacement apparent des images en une distance, donc en une vitesse connaissant l'intervalle de temps séparant deux images successives.

Le EP 2 400 460 A1 précité décrit une telle technique de mesure de la vitesse horizontale basée sur un algorithme du type dit "à flot optique", avec basculement éventuel, contrôlé de façon dynamique, vers un autre algorithme de type "détecteur de points" ou "à détection de points d'intérêt" lorsque l'algorithme à flot optique n'est plus en mesure de délivrer un résultat suffisamment fiable.

La méthode à flot optique présente de nombreux avantages, en particulier de n'imposer que très peu de contraintes sur le contraste et le contenu de la scène, et de pouvoir estimer des vitesses élevées comme des vitesses faibles par une approche de type "multirésolution". En revanche, cette méthode est très sensible aux rotations et aux changements d'attitude, et elle ne permet pas de vérifier intrinsèquement la qualité du résultat délivré, c'est-à-dire que l'algorithme délivre toujours un résultat dès lors que suffisamment de points présentent un gradient élevé, mais ce résultat est délivré même s'il n'a pas de sens.

De fait, le résultat délivré n'est pas toujours fiable, ni très précis notamment pour les faibles vitesses.

Or, si l'on souhaite réaliser un asservissement efficace et réactif de stabilisation automatique en vol stationnaire, il est nécessaire de disposer d'une mesure de vitesse horizontale qui soit à la fois précise, sensible (car les vitesses linéaires autour du point d'équilibre peuvent être très faibles) et disponible en temps réel.

Ces rotations et changements d'attitude susceptible d'influer sur la mesure de la vitesse horizontale du drone peuvent être mesurés en temps réel par la centrale inertielle. La mise en oeuvre d'un algorithme à flot optique comprend d'ailleurs, de manière en elle-même connue, une étape de compensation des rotations entre les images successivement utilisées. À cet effet, les erreurs susceptibles d'être introduites (rotations qui ajoutent une composante le long de l'intersection entre le plan image et le plan perpendiculaire à l'axe de rotation) sont compensées en ajoutant au flot optique estimé le déplacement du centre optique dû à la rotation entre deux images successives. En d'autres termes, en cas de rotation entre deux images successives de la scène captée par la caméra une nouvelle version de l'image est générée avant d'être comparée à l'image précédente, par un calcul matriciel de projection exécuté en temps réel par le logiciel au sein du processeur de signal du drone. Cette compensation de rotation permet de rendre le calcul de vitesse robuste aux rotations rencontrées notamment en vol stationnaire, et de conserver un modèle linéaire de déplacement du drone.

Une difficulté dans la mise en oeuvre de cette technique de compensation des rotations tient au fait que des erreurs sur les valeurs des angles de rotation (notamment de roulis et de tangage) délivrées à l'algorithme par la centrale inertielle produisent les mêmes conséquences qu'une translation de l'image, et que des erreurs même minimes sont susceptibles de générer des biais dans l'estimation des composantes de la vitesse horizontale - alors même que l'algorithme de compensation des rotations recale parfaitement une image sur l'autre.

Ces erreurs minimes peuvent notamment provenir d'un défaut de synchronisme entre le signal d'image délivré par la caméra verticale et le signal gyrométrique délivré par la centrale inertielle.

Si l'on veut éviter toute erreur dans le processus de compensation des rotations, il importe donc de garantir pour chaque image une synchronisation extrêmement précise de ces deux signaux.

Le mémoire de thèse de Myung Hwangbo "Robust Monocular Vision-based Navigation for a Miniature Fixed-Wing Aircraft", Carnegie-Mellon University, Robotics Institute, 15 septembre 2009, chapitre 4.2.3, rubrique "Camera-IMU synchronization", décrit une technique simple de mesure du décalage entre signal d'image et signal gyrométrique. Cette technique est basée sur l'hypothèse que ce décalage temporel reste constant. Elle consiste, lors d'une étape préalable de calibration, à imprimer au drone des mouvements sinusoïdaux et à estimer le mouvement à partir du calcul du flot optique sur ce mouvement sinusoïdal. Cette estimation de mouvement est ensuite comparée aux mesures du gyromètre, et le recalage des deux signaux de forme sinusoïdale (signal d'image et signal gyrométrique) donne la phase recherchée. Cette phase mesurée est considérée constante après l'étape de calibration, et appliquée de façon permanente et statique lors des phases de vol ultérieures.

Toutefois, dans la pratique, les erreurs de synchronisation peuvent résulter de divers facteurs susceptibles de varier en permanence, en particulier d'une certaine latence dans le traitement logiciel des signaux, latence qui n'est pas constante et varie de façon non prédictible en fonction notamment de la charge de travail du processeur à un instant donné.

La technique simple décrite plus haut de calibration préalable, qui repose sur l'hypothèse que le décalage temporel reste constant, n'est en aucune façon susceptible de prendre en compte ces phénomènes dynamiques. Le but de la présente invention est de remédier aux inconvénients exposés plus haut, en proposant une solution permettant de garantir à tout instant du vol du drone, en temps réel, une synchronisation extrêmement précise entre le signal d'image délivré par la caméra verticale et le signal gyrométrique délivré par la centrale inertielle du drone. Ceci afin d'éviter toute introduction de biais dans la correction des rotations entre images successives, avec les conséquences importantes que l'on a exposées ci-dessus en ce qui concerne la précision de l'estimation des composantes de vitesse horizontale du drone.

À cet effet, l'invention propose un drone comprenant, de manière en elle-même connue d'après le EP 2 400 460 A1 précité :

- une caméra video à visée verticale, apte à pointer vers une scène du terrain survolé par le drone pour capter une séquence d'images de cette scène et délivrer en sortie un signal d'image numérique correspondant ;
- une centrale inertielle comprenant des capteurs gyrométriques aptes à mesurer les angles d'Euler caractérisant l'attitude du drone par rapport à un repère terrestre absolu et à délivrer en sortie un signal gyrométrique représentatif des rotations instantanées du drone ;
- des moyens de compensation des rotations, recevant en entrée i) le signal d'image délivré par la caméra à visée verticale et ii) le signal gyrométrique délivré par la centrale inertielle, et délivrant en sortie des données d'image recalées, compensées des rotations du drone d'une image à la suivante ; et
- des moyens d'estimation des vitesses horizontales du drone à partir des déplacements d'une image à la suivante de la scène captée par la caméra à visée verticale, ces moyens d'estimation recevant en entrée lesdites données d'image recalées.

De façon caractéristique de l'invention :

le signal d'image et le signal gyrométrique présentant entre eux un décalage temporel variable,

- la caméra à visée verticale et la centrale inertielle sont pilotées par une horloge commune ;
- la fréquence d'acquisition des capteurs gyrométriques est un multiple de la fréquence de délivrance du signal d'image de la caméra à visée verticale ; et
- il est en outre prévu un circuit apte, en cours de vol du drone et en temps réel, à :

  • comparer le signal de synchronisation du signal gyrométrique délivré par la centrale inertielle avec le signal de synchronisation du signal d'image délivré par la caméra à visée verticale ;

  • déterminer une valeur de déphasage à partir du décalage temporel entre ces signaux de synchronisation respectifs;

  • appliquer cette valeur de déphasage en entrée des moyens de compensation des rotations ; et

- les moyens de compensation des rotations sont en outre aptes à effectuer, avant calcul desdites données d'image recalées, une correction préalable de resynchronisation du signal d'image délivré par la caméra à visée verticale sur le signal gyrométrique délivré par la centrale inertielle.

Très préférentiellement, le circuit apte à comparer le signal de synchronisation du signal gyrométrique délivré par la centrale inertielle avec le signal de synchronisation du signal d'image délivré par la caméra à visée verticale, à déterminer ladite valeur de déphasage et à appliquer cette valeur de déphasage en entrée des moyens de compensation des rotations, est un circuit en technologie matérielle.

De préférence, le drone comprend en outre des moyens intégrateurs, aptes à intégrer le signal gyrométrique délivré par la centrale inertielle sur l'intervalle de temps compris entre la délivrance de signaux d'image correspondant à deux images consécutives de la séquence d'images.

On va maintenant décrire un exemple de mise en oeuvre de la présente invention, en référence aux dessins annexés où les mêmes références désignent d'une figure à l'autre des éléments identiques ou fonctionnellement semblables.

La Figure 1 est une vue générale montrant un drone piloté par un appareil de télécommande.
La Figure 2 est un schéma par blocs des différents organes de contrôle d'asservissement et de pilotage du drone.
La Figure 3 illustre, sous forme de schéma par blocs, les différents éléments contribuant au mécanisme de synchronisation entre la caméra video et les gyromètres.

La Figure 4 illustre divers chronogrammes montrant la relation temporelle entre les signaux délivrés par la caméra et par les gyromètres.

On va maintenant décrire un exemple de réalisation de l'invention.

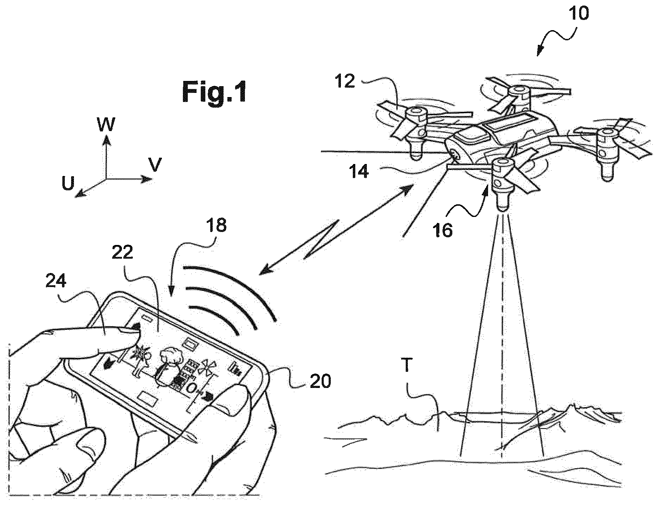

Sur la Figure 1, la référence 10 désigne de façon générale un drone, qui est par exemple un quadricoptère tel que le Bebop Drone de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle se dirige le drone, par exemple une caméra grand-angle haute définition à capteur CMOS de résolution 1920 x 1080 pixels avec une fréquence de rafraichissement du flux video de 30 fps (image par seconde). Le drone est également pourvu d'une caméra 16 à visée verticale pointant vers le bas, apte à capter des images successives du terrain survolé T et utilisée notamment pour évaluer la vitesse du drone par rapport au sol. Il s'agit par exemple d'une caméra à capteur CMOS de résolution QVGA (320 x 240 pixels) avec une fréquence de rafraichissement du flux video de 60 fps et un angle de champ de 64°.

Le drone est également muni de capteurs inertiels (accéléromètres et gyromètres) permettent de mesurer avec une certaine précision les vitesses angulaires et les angles d'attitude du drone, c'est-à-dire les angles d'Euler (tangage $\varphi$, roulis $\theta$ et lacet $\psi$) décrivant l'inclinaison du drone par rapport à un plan horizontal d'un repère terrestre fixe UVW, étant entendu que les deux composantes longitudinale et transversale de la vitesse horizontale sont intimement liées à l'inclinaison suivant les deux axes respectifs de tangage et de roulis.

Le drone 10 est piloté par un appareil de télécommande distant 18 tel qu'un téléphone ou tablette multimedia à écran tactile et accéléromètres intégrés, par exemple un *smartphone* de type *iPhone* (marque déposée) ou autre, ou une tablette de type *iPad* (marque déposée) ou autre. Il s'agit d'un appareil standard, non modifié si ce n'est le chargement d'un logiciel applicatif spécifique tel que l'application mobile *AR Free Flight* (marque déposée) pour contrôler le pilotage du drone 10 et la visualisation des images prises par la caméra frontale embarquée 14. L'appareil 18 comprend un corps 20 et un écran tactile 22 affichant l'image de la scène captée par la caméra frontale 14, avec en superposition un certain nombre de symboles permettant l'activation de commandes de pilotage (montée/descente, etc.) par simple contact d'un doigt 24 de l'utilisateur sur les symboles affichés à l'écran. L'appareil 18 est également pourvu de capteurs d'inclinaison permettant de contrôler l'attitude du drone en imprimant à l'appareil des inclinaisons correspondantes selon des axes de roulis et de tangage pour le faire avancer ou reculer. Les actions de l'utilisateur sont interprétées par le logiciel applicatif spécifique, qui les transforme en signaux de commande à destination du drone.

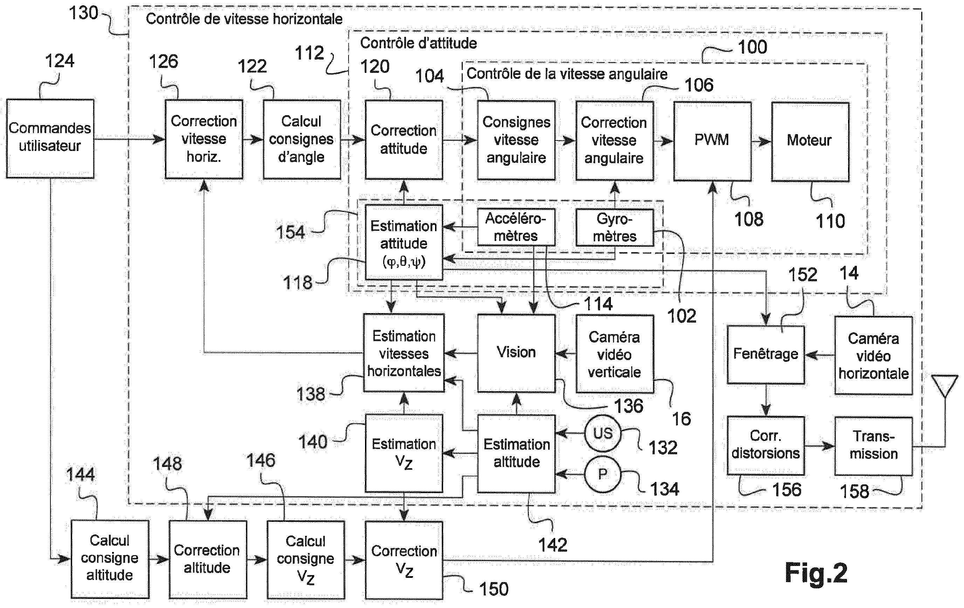

La Figure 2 est un schéma par blocs des différents organes de contrôle, d'asservissement et de pilotage du drone, ainsi que de correction des déplacements de l'image selon la technique de l'invention (on notera que, bien que ces schémas soient présentés sous forme de circuits intercon-nectés, la mise en oeuvre des différentes fonctions est essentiellement logicielle, cette représentation n'ayant qu'un caractère illustratif).

De façon générale, le système de pilotage implique plusieurs boucles imbriquées pour le contrôle de la vitesse horizontale, de la vitesse angulaire de l'attitude du drone et des variations d'altitude, automatiquement ou sous commande de l'utilisateur.

La boucle la plus centrale est la boucle 100 de contrôle de la vitesse angulaire, qui utilise d'une part les signaux fournis par des gyromètres 102 et d'autre part une référence constituée par des consignes de vitesse angulaire 104. Ces informations sont appliquées en entrée d'un étage 106 de correction de la vitesse angulaire, qui pilote lui-même un étage 108 de contrôle des moteurs 110 afin de commander séparément le régime des différents moteurs pour corriger la vitesse angulaire du drone par l'action combinée des rotors entrainés par ces moteurs.

La boucle 100 de contrôle de la vitesse angulaire est imbriquée dans une boucle 112 de contrôle d'attitude, qui opère à partir des indications fournies par les gyromètres 102 et par des accéléromètres 114. Les données issues de ces capteurs sont appliquées à un étage 118 qui produit une estimation de l'attitude réelle du drone, appliquée à un étage 120 de correction d'attitude. Cet étage 120 compare l'attitude réelle du drone à des consignes d'angle générées par un circuit 122 à partir de commandes directement appliquées par l'utilisateur 124 et/ou à partir de données générées en interne par le pilote automatique du drone via le circuit 126 de correction de vitesse horizontale. Les consignes éventuellement corrigées appliquées au circuit 120 et comparées à l'attitude réelle du drone sont transmises par le circuit 120 au circuit 104 pour commander les moteurs de manière appropriée.

Une boucle de contrôle de vitesse horizontale 130 comporte la caméra video verticale 16, un capteur télémétrique à ultrasons 132 et un capteur barométrique 134 faisant fonction d'altimètre. Un circuit 136 assure le traitement des images produites par la caméra verticale 16, en combinaison avec les signaux de l'accéléromètre 114 et du circuit d'estimation d'attitude 118, pour produire des données permettant d'obtenir au moyen d'un circuit 138 une estimation des vitesses horizontales $V_x$ et $V_y$ selon les deux axes de tangage et de roulis du drone. Les vitesses horizontales $V_x$ et $V_y$ estimées sont corrigées par l'estimation de vitesse verticale $V_z$ donnée par un circuit 140 et par une estimation de la valeur de l'altitude $z$ donnée par le circuit 142 à partir des informations des capteurs 132 et 134.

Pour le contrôle des déplacements verticaux du drone, l'utilisateur 124 applique des commandes à un circuit de calcul de consigne d'altitude 144, consigne qui est appliquée à un circuit de calcul de consigne de vitesse ascensionnelle $V_z$ 146 via le circuit de correction d'altitude 148 recevant la valeur d'altitude estimée donnée par le circuit 142. La vitesse ascensionnelle $V_z$ ainsi calculée est appliquée à un circuit 150 qui la compare à la vitesse correspondante estimée par le circuit 140, et modifie en conséquence les données de commande des moteurs (circuit 108) en augmentant ou réduisant la vitesse de rotation simultanément sur tous les moteurs de façon à minimiser l'écart entre vitesse ascensionnelle de consigne et vitesse ascensionnelle mesurée.

En ce qui concerne la caméra video frontale 14, celle-ci délivre des données video brutes (données de pixel) à un circuit de fenêtrage 152 assurant la sélection des pixels utiles dans une zone de capture déterminée par la centrale inertielle 154 (incluant les gyromètres 102, les accéléromètres 114 et le circuit d'estimation d'attitude 118). Les données video inscrites dans la zone de capture sont appliquées à un circuit 156 de correction des distorsions géométriques qui produit des données video rectifiées, elles-mêmes délivrées à un circuit émetteur 158 assurant la transmission de l'image video au dispositif de télécommande distant tenu par l'utilisateur.

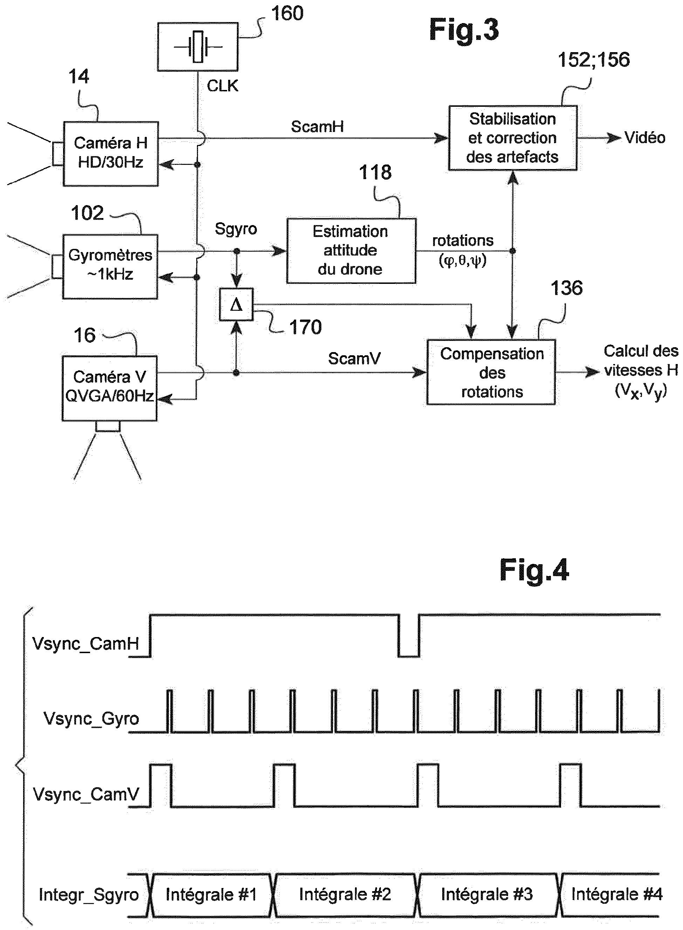

On va maintenant décrire plus en détail, en référence à la Figure 3, les divers aspects relatifs à la synchronisation des signaux gyrométriques et des signaux d'images de la caméra verticale, pour le calcul des vitesses horizontales estimées par le circuit 138.

Les gyromètres 102, la caméra frontale (caméra horizontale) 14 et la caméra à visée verticale 16 sont pilotés par un circuit d'horloge commun 160, les fréquences de fonctionnement respectives des gyromètres et des caméras 14 et 16 étant des sous-multiples de la fréquence CLK de cette horloge 160.

Les gyromètres 102 et la caméra à visée verticale 16 sont ainsi configurés de sorte que :

$$F_{gyro} = K.F_{camV}$$

$F_{gyro}$ étant la fréquence d'acquisition des gyromètres,
$F_{camV}$ étant la fréquence d'acquisition des images par la caméra 16 (typiquement $F_{camV}$ = 60 Hz), et $K$ étant un entier positif.

Le fait que $K$ soit un entier et que l'horloge de base soit la même pour les gyromètres et la caméra, assure qu'il y aura toujours $K$ échantillons du signal gyrométrique $S_{gyro}$ par image du signal $S_{camV}$, sans aucune dérive, les mesures d'angle tombant toujours au même instant.

La caméra horizontale 14 délivre un signal $S_{camH}$ aux circuits 152 et 156 précités de fenêtrage et de correction des distorsions, permettant de stabiliser l'image video et d'en corriger divers artefacts avant que celle-ci ne soit délivrée à l'utilisateur. Ce signal d'image $S_{camH}$ comprend un signal de contenu d'image associé à un signal de synchronisation $V_{sync\_CamH}$.

Les gyromètres 102 délivrent un signal $S_{gyro}$ transmis au circuit 118 précité d'estimation de l'attitude du drone, qui estime les rotations $\varphi, \theta$ et $\psi$ du drone dans les trois axes et les transmet aux circuits 152, 156 et 136. Ce signal gyrométrique $S_{gyro}$ comprend un signal de contenu (mesures des rotations) associé à un signal de synchronisation $V_{sync\_Gyro}$.

La caméra verticale 16 délivre un signal $S_{camV}$ appliqué au circuit 136 précité qui, entre autres traitements video, assure une compensation des rotations d'une image à la suivante en fonction des estimées des rotations délivrées, à chaque image, par le circuit 118, avant de calculer les vitesses horizontales $V_x$ et $V_y$ par application de divers algorithmes, incluant notamment un algorithme à flot optique opérant par comparaison du déplacement apparent entre deux images consécutives du terrain survolé par le drone. Ce signal d'image $S_{camV}$ comprend un signal de contenu d'image associé à un signal de synchronisation $V_{sync\_camV}$.

La Figure 4 illustre une série de chronogrammes montrant en regard :

- le signal $V_{sync\_camH}$ de synchronisation de la caméra horizontale 14,
- le signal $V_{sync\_Gyro}$ de synchronisation des gyromètres 102, et
- le signal $V_{sync\_camV}$ de synchronisation de la caméra verticale 16.

La cadence des images délivrées par la caméra horizontale est typiquement de 30 Hz et celle délivrées par la caméra verticale, de 60 Hz.

Comme on peut le voir sur ces chronogrammes, la caméra horizontale réalise une acquisition relativement lente, l'acquisition d'une image commençant sur le front montant du signal $V_{sync\_CamH}$ et se terminant sur le front descendant de ce même signal. Une image de la caméra horizontale correspond de ce fait à un nombre important d'échantillons des gyromètres (six échantillons du signal $S_{gyro}$ sur l'exemple simplifié illustré, en réalité typiquement 30 échantillons).

En ce qui concerne la caméra verticale, les acquisitions sont réalisées beaucoup plus rapidement, entre le front montant et le front descendant du signal $V_{sync\_Camv}$, et l'algorithme d'estimation des vitesses doit connaitre de la façon la plus précise possible la différence d'attitude du drone entre deux images successives. Dans l'exemple illustré, cette acquisition ne correspond qu'à un unique échantillon du signal gyrométrique (en réalité, typiquement quatre échantillons)

La variation d'attitude du drone entre deux images successives est avantageusement calculée avec intégration du signal gyrométrique $S_{gyro}$ délivré par chacun des gyromètres (chronogramme *Integr_S$_{gyro}$* de la Figure 4). Mais surtout, il est indispensable de disposer d'une synchronisation extrêmement précise entre le signal gyrométrique *S$_{gyro}$* et le signal d'image *S$_{camV}$* délivré par la caméra verticale.

À cet égard, bien que le signal *S$_{gyro}$* du capteur gyrométrique et le signal *S$_{camV}$* de la caméra 16 soient délivrés à la même cadence (à un multiple entier près), ceci ne donne aucune garantie sur la concordance de phase de ces deux signaux, c'est-à-dire sur leur synchronisme véritable.

Plus précisément, l'horloge commune fait en sorte que le signal gyrométrique *S$_{gyro}$* ne "glisse" pas par rapport au signal video *S$_{camV}$*. Ceci signifie que lorsqu'une nouvelle image est disponible, il s'écoule toujours le même intervalle de temps avant que le gyromètre délivre une nouvelle donnée. En revanche, cet intervalle de temps varie d'un drone à l'autre, et d'une séquence de pilotage à l'autre, car les capteurs gyrométriques n'ont pas été démarrés en même temps que la caméra video.

En effet, les acquisitions video et les acquisitions gyrométriques sont déclenchées par logiciel, et il n'est de ce fait pas certain que les deux acquisitions démarrent en même temps, ni que l'intervalle de temps séparant les deux démarrages soit constant d'un drone à l'autre, ou d'une séquence de pilotage à l'autre pour un même drone.

Pour garantir une synchronisation parfaite, l'invention propose, de façon caractéristique, d'utiliser un composant matériel (*hardware*) 170 de mesure de phase entre les signaux *S$_{gyro}$* et *S$_{camV}$*. Ce composant, du fait de sa nature matérielle, peut mesurer avec une grande précision et une très grande rapidité le décalage temporel Δ entre les signaux *V$_{sync\_CamV}$* et *V$_{sync\_Gyro}$* (Figure 4). On notera qu'une mesure unique est suffisante, puisque les horloges ont été réglées de manière à ne pas dériver.

Les deux mécanismes que l'on vient de décrire - horloge 160 commune et circuit *hardware* 170 de mesure du déphasage - donnent une mesure extrêmement précise du déphasage entre l'instant d'acquisition du début de l'image et la fin de la période d'échantillonnage du gyromètre, ce qui permet de relier dans le temps les signaux gyrométriques et video avec une très grande précision, en temps réel à un cycle d'horloge près. L'horloge système 160 fonctionnant à plusieurs mégahertz, ceci représente quelques nanosecondes d'erreur sur le calage entre les signaux video et gyrométrique, ce qui est très faible et permet d'opérer une correction extrêmement précise et efficace.

En revanche, en l'absence de ce mécanisme il aurait été nécessaire de relever par logiciel l'instant de délivrance de chaque nouvelle donnée du gyromètre et de chaque nouvelle image acquise. Une telle méthode serait beaucoup moins précise et plus irrégulière car sensible au temps de réaction du système, et ne procurerait qu'une précision de l'ordre de 100 μs.

**Revendications**

1. Un drone (10), comprenant :

- une caméra video à visée verticale (16), apte à pointer vers une scène du terrain (T) survolé par le drone pour capter une séquence d'images de cette scène et délivrer en sortie un signal d'image (*S$_{camV}$*) numérique correspondant ;
- une centrale inertielle (154) comprenant des capteurs gyrométriques (102) aptes à mesurer les angles d'Euler (φ, θ, ψ) caractérisant l'attitude du drone par rapport à un repère terrestre absolu (UVW) et à délivrer en sortie un signal gyrométrique (*S$_{gyro}$*) représentatif des rotations instantanées du drone ;
- des moyens de compensation des rotations (136), recevant en entrée i) le signal d'image (*S$_{camV}$*) délivré par la caméra à visée verticale et ii) le signal gyrométrique (*S$_{gyro}$*) délivré par la centrale inertielle, et délivrant en sortie des données d'image recalées, compensées des rotations du drone d'une image à la suivante ; et
- des moyens (138) d'estimation des vitesses horizontales du drone à partir des déplacements d'une image à la suivante de la scène captée par la caméra à visée verticale, ces moyens d'estimation recevant en entrée lesdites données d'image recalées,

**caractérisé en ce que**, le signal d'image et le signal gyrométrique présentant entre eux un décalage temporel variable :

- la caméra à visée verticale et la centrale inertielle sont pilotées par une horloge commune (160) ;
- la fréquence d'acquisition des capteurs gyrométriques est un multiple de la fréquence de délivrance du signal d'image de la caméra à visée verticale ; et
- il est en outre prévu un circuit (170) apte, en cours de vol du drone et en temps réel, à :

• comparer le signal de synchronisation (*V$_{sync\_Gyro}$*) du signal gyrométrique (*S$_{gyro}$*) délivré par la centrale inertielle avec le signal de synchronisation (*V$_{sync\_CamV}$*) du signal d'image (*S$_{camV}$*) délivré par la caméra à visée verticale ;
• déterminer une valeur de déphasage à partir du décalage temporel (Δ) entre ces signaux de synchronisation respectifs ;
• appliquer cette valeur de déphasage en entrée des moyens de compensation des rotations (136) ; et

- les moyens de compensation des rotations (136) sont en outre aptes à effectuer, avant calcul desdites données d'image recalées, une correction préalable de resynchronisation du signal d'image ($S_{camV}$) délivré par la caméra à visée verticale sur le signal gyrométrique délivré par la centrale inertielle.

2. Le drone de la revendication 1, dans lequel ledit circuit (170) apte à comparer le signal de synchronisation du signal gyrométrique délivré par la centrale inertielle avec le signal de synchronisation du signal d'image délivré par la caméra à visée verticale, à déterminer ladite valeur de déphasage, et à appliquer cette valeur de déphasage en entrée des moyens de compensation des rotations, est un circuit en technologie matérielle.

3. Le drone de la revendication 1, comprenant en outre :

- des moyens intégrateurs, aptes à intégrer le signal gyrométrique délivré par la centrale inertielle sur l'intervalle de temps compris entre la délivrance de signaux d'image correspondant à deux images consécutives de la séquence d'images.

4. Le drone de la revendication 1, dans lequel ladite valeur de déphasage est déterminée entre l'instant d'acquisition du début de l'image et la fin de la période d'échantillonnage du gyromètre.

**Patentansprüche**

1. Drohne (10), umfassend:

- eine Videokamera mit Vertikalsucher (16), die auf eine Szene des Gebiets (T) ausrichtbar ist, das von der Drohne überflogen wird, um eine Sequenz von Bildern von dieser Szene aufzunehmen und am Ausgang ein entsprechendes digitales Bildsignal ($S_{camV}$) auszugeben;
- eine inertiale Zentrale (154), die Drehbewegungsmesssensoren (102) umfasst, die in der Lage sind, die Euler-Winkel ($\varphi$, $\theta$, $\psi$) zu messen, welche die Flugverhalten der Drohne gegenüber einem absoluten terrestrischen Bezugssystem (UVW) kennzeichnen, und am Ausgang ein Drehbewegungsmesssignal ($S_{gyro}$) auszugeben, das für die kurzzeitigen Drehungen der Drohne repräsentativ ist;
- Mittel zur Kompensation der Drehungen (136), die am Eingang i) das von der Kamera mit Vertikalsucher ausgegebene Bildsignal ($S_{camV}$) und ii) das von der inertialen Zentrale ausgegebene Drehbewegungsmesssignal ($S_{gyro}$) empfangen und am Ausgang nachgestellte Bilddaten ausgeben, die um die Drehungen der Drohne von einem Bild zum nächsten kompensiert sind; und
- Mittel (138) zum Schätzen der Horizontalgeschwindigkeiten der Drohne ausgehend von den Bewegungen eines Bildes zum nächsten der von der Kamera mit Vertikalsucher aufgenommenen Szene, wobei diese Schätzungsmittel am Eingang die nachgestellte Bilddaten empfangen,

**dadurch gekennzeichnet, dass**, da das Bildsignal und das Drehbewegungsmesssignal zwischen einander einen variablen zeitlichen Versatz aufweisen,

- die Kamera mit Vertikalsucher und die inertiale Zentrale von einem gemeinsamen Taktgeber (160) gesteuert werden;
- die Erfassungsfrequenz der Drehbewegungsmesssensoren ein Vielfaches der Ausgabefrequenz des Bildsignals der Kamera mit Vertikalsucher ist; und
- ferner eine Schaltung (170) vorgesehen ist, die in der Lage ist, bei laufendem Flug der Drohne und in Echtzeit:

• das Synchronisierungssignal ($V_{sync\_Gyro}$) des von der inertialen Zentrale ausgegebenen Drehbewegungsmesssignals ($S_{gyro}$) mit dem Synchronisierungssignal ($V_{sync\_camV}$) des von der Kamera mit Vertikalsucher ausgegebenen Bildsignals ($S_{camV}$) zu vergleichen;
• ausgehend von dem zeitlichen Versatz ($\Delta$) zwischen diesen jeweiligen Synchronisierungssignalen einen Versatzwert zu bestimmen;
• diesen Versatzwert am Eingang der Mittel zur Kompensation der Drehungen (136) anzuwenden; und

- die Mittel zur Kompensation der Drehungen (136) ferner in der Lage sind, vor Berechnung der nachgestellte Bilddaten, eine vorherige Korrektur zur Resynchronisierung des von der Kamera mit Vertikalsucher ausgegebenen Bildsignals ($S_{camV}$) mit dem von der inertialen Zentrale ausgegebenen Drehbewegungsmesssignal ($S_{gyro}$) vorzunehmen.

2. Drohne nach Anspruch 1, wobei die Schaltung (170), die in der Lage ist, das Synchronisierungssignal des von der inertialen Zentrale ausgegebenen Drehbewegungsmesssignals mit dem Synchronisierungssignal des von der Kamera mit Vertikalsucher ausgegebenen Bildsignals zu vergleichen, den Versatzwert zu bestimmen und diesen Versatzwert am Eingang der Mittel zur Kompensation der Drehungen anzuwenden, eine Schaltung in Hardware-Technologie ist.

3. Drohne nach Anspruch 1, ferner umfassend:

   - Integrationsmittel, die in der Lage sind, das von der inertialen Zentrale ausgegebene Drehbewegungsmesssignal in das Zeitintervall zwischen der Ausgabe von Bildsignalen zu integrieren, das zwei aufeinander folgenden Bildern der Bildsequenz entspricht.

4. Drohne nach Anspruch 1, wobei der Versatzwert zwischen dem Erfassungszeitpunkt des Anfangs des Bildes und dem Ende des Abtastzeitraums des Drehbewegungssensors bestimmt wird.

**Claims**

1. A drone (10) comprising:

   - a vertical-view video camera (16), adapted to point towards a scene of the ground (T) overflown by the drone, to capture a sequence of images of this scene and to deliver as an output a corresponding digital image signal ($S_{camV}$);
   - an inertial unit (154) comprising gyrometric sensors (102) adapted to measure the Euler angles ($\varphi, \theta, \psi$) characterising the attitude of the drone with respect to an absolute terrestrial reference system (UVW) and to deliver as an output a gyrometric signal ($S_{gyro}$) representative of the instantaneous rotations of the drone;
   - rotation compensation means (136), receiving as an input i) the image signal ($S_{camV}$) delivered by the camera and ii) the gyrometric signal ($S_{gyro}$) delivered by the inertial unit, and delivering as an output readjusted image data, compensated for the rotations of the drone from one image to the following one; and
   - means (138) for estimating the horizontal speeds of the drone based on the displacements from one image to the following one of the scene captured by the vertical-view camera, these estimation means receiving as an input said readjusted image data,

   **characterized in that**, the image signal and the gyrometric signal having a variable time offset between each other:

   - the vertical-view camera and the inertial unit are driven by a common clock (160);
   - the frequency of acquisition of the gyrometric sensors is a multiple of the frequency of delivery of the image signal of the vertical-view camera; and

   - it is further provided a circuit (170) adapted, during the flight of the drone and in real time, to:

     • compare the synchronisation signal ($V_{sync\_Gyro}$) of the gyrometric signal ($S_{gyro}$) delivered by the inertial unit with the synchronisation signal ($V_{sync\_CamV}$) of the image signal ($S_{camV}$) delivered by the vertical-view camera;
     • determine a phase-shift value based on the time offset ($\Delta$) between these respective synchronisation signals;
     • apply this phase-shift value at the input of the rotation compensation means (136); and

   - the rotation compensation means (136) are further adapted to perform, before the computation of said readjusted image data, a previous correction of resynchronization of the image signal ($S_{camV}$) delivered by the vertical-view camera onto the gyrometric signal delivered by the inertial unit.

2. The drone according to claim 1, wherein said circuit (170) adapted to compare the synchronisation signal of the gyrometric signal delivered by the inertial unit with the synchronisation signal of the image signal delivered by the vertical-view camera, to determine said phase-shift value, and to apply this phase-shift value at the input of the rotation compensation means, is a hardware-technology circuit.

3. The drone according to claim 1, further comprising :

   - integrator means, adapted to integrate the gyrometric signal delivered by the inertial unit over the time interval comprised between the delivery of image signals corresponding to two consecutive images of the sequence of images.

4. The drone according to claim 1, wherein said phase-shift value is determined between the instant of acquisition of the beginning of the image and the end of the sampling period of the gyrometer.

**Fig.1**

Fig.2

EP 3 076 258 B1

## Fig.3

## Fig.4

## RÉFÉRENCES CITÉES DANS LA DESCRIPTION

**Documents brevets cités dans la description**

- EP 2364757 A1
- EP 2400460 A1
- EP 2613213 A1
- EP 2644240 A1
- EP 2613214 A1

**Littérature non-brevet citée dans la description**

- Camera-IMU synchronization. **MYUNG HWANGBO.** Robust Monocular Vision-based Navigation for a Miniature Fixed-Wing Aircraft. Carnegie-Mellon University, Robotics Institute, 15 Septembre 2009
- **PARROT SA.** *Bebop Drone*